# EUROPÄISCHE PATENTSCHRIFT

(11) **EP 0 951 402 B1**
(45) Veröffentlichungstag und Bekanntmachung des Hinweises auf die Patenterteilung: **04.02.2004**
(21) Anmeldenummer: 98958166.5
(22) Anmeldetag: 24.09.1998
(51) Int. Cl.: B60J 7/057

(54) **VERFAHREN ZUM BETRIEB EINES SCHIEBEDACHSYSTEMS UND SCHIEBEDACHSYSTEM**
METHOD FOR OPERATING A SLIDING ROOF SYSTEM AND A SLIDING ROOF SYSTEM
PROCEDE POUR LE FONCTIONNEMENT D'UN SYSTEME DE TOIT OUVRANT, ET SYSTEME DE TOIT OUVRANT

(30) Priorität: 13.11.1997 DE 19750189
(43) Veröffentlichungstag der Anmeldung: 27.10.1999
(73) Patentinhaber: ROBERT BOSCH GMBH, 70442 Stuttgart (DE)
(72) Erfinder: LAMM, Hubert, D-77876 Kappelrodeck (DE); HADERER, Günter, D-77815 Bühl (DE)
(86) Internationale Anmeldenummer: PCT/DE1998/002847
(87) Internationale Veröffentlichungsnummer: WO 1999/025578

(56) Entgegenhaltungen:
- DE-A- 4 132 499
- DE-U- 29 604 717

## Beschreibung

### Stand der Technik

Die Erfindung betrifft ein Verfahren zum Betrieb eines Schiebedachsystems mit einem Schiebedach, einem Schiebedachantrieb mit einem Schiebedachmotor und einer Vorrichtung zur Steuerung des Schiebedachantriebs. Die vorliegende Erfindung betrifft ferner ein derartiges Schiebedachsystem.

Konventionelle Schiebedachsysteme weisen heute in der Mehrzahl ein Schiebedach auf, das nicht mehr von Hand bedient werden muß, sondern über einen Schiebedachantrieb, z. B. mit einem elektrischen Schiebedachmotor, verfügt. Moderne Schiebedachsysteme sind dabei zunehmend komplex. Sie gehen aus Systemgründen oft in einen von der Normalfunktion abweichenden Betriebszustand über. Derartige Betriebszustände umfassen beispielsweise Situationen, bei denen der Schiebedachmotor entnormiert ist, die Schließkraftbegrenzung außer Betrieb gesetzt ist, eine oder mehrere Systemkomponenten defekt sind oder der Schiebedachmotor im Notbetrieb geschaltet ist. Durch einen unsachgemäßen Eingriff des Fahrers eines Kraftfahrzeugs, bedingt durch die Unkenntnis über den Betriebszustand des Schiebedachsystems, können sich Gefahrenquellen ergeben.

Aus der gattungsgemäßen DE 41 32 499 A ist eine Betätigungseinrichtung für Motoren von Schiebedächern in Kraftfahrzeugen bekannt. Eine Anzeigeeinrichtung zeigt eine Sollposition des Schiebedachs an. Eine Vorwahleinrichtung dient der Einstellung der auf der Anzeigeeinrichtung wiedergegebenen Sollposition. Eine Auslöseeinrichtung aktiviert die Betätigungseinrichtung und bewirkt eine Verstellung des Schiebedachs in die vorgewählte Sollposition.

Eine Bedien- und Anzeigeeinrichtung für Stellelemente eines Kraftfahrzeugs ist weiterhin aus der DE 296 04 717 U bekannt.

### Vorteile der Erfindung

Die vorliegende Erfindung, bei der Informationen über den Betriebszustand des Schiebedachsystems ermittelt und mittels einer akustischen Anzeigeeinrichtung angezeigt werden, hat demgegenüber den Vorteil, daß dem Fahrer gewisse Informationen über den Betriebszustand des Schiebedachsystems mitgeteilt werden. Erfindungsgemäß verfügt das Schiebedachsystem über ein oder mehrere Signalausgänge, über welche Informationen über den Betriebszustand an eine oder mehrere Anzeigeeinrichtungen übermittelt werden. Damit wird die Gefahr reduziert, daß der Fahrer eines Kraftfahrzeugs in Unkenntnis über den aktuellen Betriebszustand des Schiebedachsystems einen Eingriff in das System vornimmt, der zu einer Gefährdung seiner Person oder des Verkehrs führen könnte.

Durch die in den Unteransprüchen genannten Maßnahmen sind vorteilhafte Weiterbildungen und Verbesserungen des im Anspruch 1 angegebenen Verfahrens bzw. des in Anspruch 6 angegebenen Schiebedachsystems möglich.

Erfindungsgemäß ist vorgesehen, daß der Betriebszustand mittels einer akustischen Anzeigeeinrichtung mitgeteilt werden kann. Dabei arbeitet die akustische Anzeigeeinrichtung vorzugsweise mit einem geeigneten Signalgeber, welcher durch verschiedene Töne oder Signalfolgen den Betriebszustand des Schiebedachsystems anzeigt. Diese Ausführungsform hat den Vorteil, daß sie auf einfache Weise mit bereits bekannten konventionellen Schiebedachsystemen kompatibel ist. Die Informationsübermittlung erfolgt insbesondere über eine Ansteuerung des Motors (Taktung) mit einem 2 kHz-Signal.

Eine weitere Ausführungsform sieht eine optische Anzeigeeinrichtung mittels einer oder mehrerer Signallampen oder Leuchtdioden vor, welche durch zeitweises oder ständiges Leuchten oder Blinken den Betriebszustand des Schiebedachsystems anzeigen.

Die erfindungsgemäß ebenfalls vorgesehene alphanumerische Anzeigeeinrichtung ist vorzugsweise in einem zentralen, dem Fahrer des Kraftfahrzeugs zugänglichen Bereich angeordnet und zeigt Informationen über den Betriebszustand des Schiebedachsystems durch geeignete Übertragungsmedien vorteilhafterweise im Klartext an. Ein geeignetes Übertragungsmedium ist z. B. ein CAN-Bus.

### Zeichnung

Im folgenden wird die Erfindung anhand eines Ausführungsbeispiels mit Bezug auf die Zeichnung näher erläutert. Die einzige Figur zeigt eine schematische Darstellung eines erfinduncsgemäßen Schiebedachsystems.

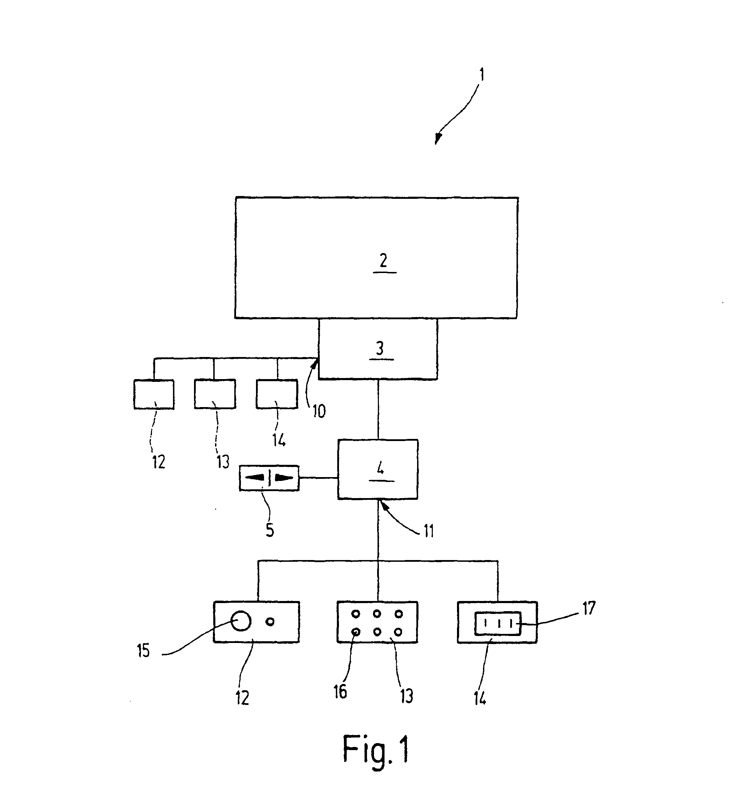

Das in Figur 1 schematisch dargestellte erfindungsgemäße Schiebedachsystem 1 umfaßt ein Schiebedach 2, einen Schiebedachantrieb 3 mit einem Schiebedachmotor sowie eine Steuerung 4 für den Schiebedachantrieb 3. Über geeignete Elemente, z. B. eine Bedientaste 5, wird die Steuerung 4 angesprochen, die daraufhin den Schiebedachantrieb 3 ansteuert, wodurch das Schiebedach 2 geöffnet oder geschlossen wird. Das Schiebedachsystem 1 umfaßt weitere, hier nicht näher dargestellte Elemente, z. B. eine Vorrichtung für den Notbetrieb des Schiebedachs 2 oder eine Schließkraftbegrenzung.

Erfindungsgemäß ist vorgesehen, daß ein oder mehrere Sianalausgänge 10, 11 für die Übermittlung von Informationen über den Betriebszustand des Schiebedachsystems 1 vorgesehen sind. Ein Signalausgang 10 kann z. B. dem Schiebedachantrieb 3 zugeordnet sein. Statt dessen oder zusätzlich kann ein Signalausgang 11 der Steuerung 4 zugeordnet sein. Am Signalausgang 10, 11 sind ein oder mehrere Anzeigeeinrichtungen 12, 13, 14 angeschlossen. Die Anzeigeeinrichtung 12 ist eine akustische Anzeigeeinrichtung mit einem Lautsprecher 15. Die akustische Anzeigeeinrichtung 12 zeigt Informationen durch verschiedene Töne oder Signalfolgen an. Die Anzeigeeinrichtung 13 ist eine mit Leuchtdioden 16 versehene optische Anzeigeeinrichtung, die die Informationen über den Betriebszustand des Schiebedachsystems durch Leucht- oder Blinksignale angezeigt. Die Anzeigeeinrichtung 14 ist eine alphanumerische Anzeigeeinrichtung mit einem Display 17, z. B. einem LCD-Display. Die alphanumerische Anzeige 14 isc z. E. in einem zentralen, dem Fahrer zugänglichen Bereich im Innenraum des Kraftfahrzeugs angeordnet. Informationen über den Betriebszustand des Schiebedachsystems 1 wird dann z. B. über einen CAN-Bus an die Anzeigeeinrichtung 14 übermittelt und auf dem Display 17 im Klartext angezeigt.

## Patentansprüche

1. Verfahren zum Betrieb eines Schiebedachsystems (1) mit einem Schiebedach (2), einem Schiebedachantrieb (3) mit einem Schiebedachmotor und einer Vorrichtung (4) zur Steuerung des Schiebedachantriebs (3), bei dem Informationen über den Betriebszustand des Schiebedachsystems (1) ermittelt und mittels mindestens einer Anzeigeeinrichtung (12,13,14) angezeigt werden, **dadurch gekennzeichnet, daß** die Informationen mittels eines Signalgebers (15), welcher durch verschiedene Töne und/oder Signalfolgen den Betriebszustand des Schiebedachsystems anzeigt, akustisch angezeigt werden.

2. Verfahren nach Anspruch 1, **dadurch gekennzeichnet, daß** zur Ermittlung des Betriebszustands der Motor mit einem Signal, insbesondere einem 2 kHz-Signal, angesteuert (getaktet) wird.

3. Verfahren nach Anspruch 1, **dadurch gekennzeichnet, daß** die Informationen ferner mittels Leuchtelementen (16), insbesondere Signallampen und/oder Leuchtdioden, optisch angezeigt werden.

4. Verfahren nach Anspruch 1, **dadurch gekennzeichnet, daß** die Informationen ferner mittels einer alphanumerischen Anzeigeeinrichtung (17) in Klartext angezeigt werden.

5. Verfahren nach Anspruch 4, **dadurch gekennzeichnet, daß** die Informationen mittels eines CAN-Bus an die alphanumerische Anzeigeeinrichtung (17) übertragen werden.

6. Schiebedachsystem (1) mit einem Schiebedach (2), einem Schiebedachantrieb (3) mit einem Schiebedachmotor, einer Vorrichtung (4) zur Steuerung des Schiebedachantriebs (3), einer Einrichtung zur Ermittlung des Betriebszustandes des Schiebedachsystems (1), einer oder mehreren Anzeigeeinrichtungen (12,13,14) zur Anzeige von Informationen über den Betriebszustand sowie einem oder mehreren Signalausgängen (10,11) zur Übermittlung der Informationen an die mindestens eine Anzeigeeinrichtung (12,13,14), **dadurch gekennzeichnet, daß** die Anzeigeeinrichtung oder eine der Anzeigeeinrichtungen (12,13,14) eine akustische Anzeigeeinrichtung (12) ist, die einen Signalgeber (15) umfaßt, welcher durch verschiedene Töne und/oder Signalfolgen den Betriebszustand des Schiebedachsystems akustisch anzeigt.

7. Schiebedachsystem nach Anspruch 6, **dadurch gekennzeichnet, daß** es ferner eine optische Anzeigeeinrichtung (13) aufweist, die Leuchtelemente (16), insbesondere Signallampen und/oder Leuchtdioden, umfaßt.

8. Schiebedachsystem nach Anspruch 6, **dadurch gekennzeichnet, daß** es ferner eine alphanumerische Anzeigeeinrichtung (14) aufweist, die eine Ausgabeeinheit zur Anzeige der Informationen in Klartext umfaßt.

9. Schiebedachsystem nach Anspruch 8, **dadurch gekennzeichnet, daß** zur Übertragung der Informationen an die alphanumerische Anzeigeeinrichtung ein CAN-Bus vorgesehen ist.

## Claims

1. Method for the operation of a sliding roof system (1) with a sliding roof (2), a sliding roof drive (3) having a sliding roof motor, and a device (4) for controlling the sliding roof drive (3), in which information about the operational state of the sliding roof system (1) is determined and displayed by means of at least one display device (12, 13, 14), **characterized in that** the information is displayed acoustically by means of a signal transmitter (15) which displays the operational state of the sliding roof system by means of various tones and/or signal sequences.

2. Method according to Claim 1, **characterized in that**, in order to determine the operational state, the motor is activated (clocked) by a signal, in particular a 2 kHz signal.

3. Method according to Claim 1, **characterized in that** the information is furthermore displayed visually by means of illuminated elements (16), in particular signal lamps and/or light-emitting diodes.

4. Method according to Claim 1, **characterized in that** the information is furthermore displayed in plain text by means of an alphanumeric display device (17).

5. Method according to Claim 4, **characterized in that** the information is transmitted to the alphanumeric display device (17) by means of a CAN bus.

6. Sliding roof system (1) with a sliding roof (2) a sliding roof drive (3) having a sliding roof motor, a device (4) for controlling the sliding roof drive (3), a device for determining the operational state of the sliding roof system (1), one or more display devices (12, 13, 14) for displaying information about the operational state, and one or more signal outputs (10, 11) for transmitting the information to the at least one display device (12, 13, 14), **characterized in that** the display device or one of the display devices (12, 13, 14) is an acoustic display device (12) which comprises a signal transmitter (15) which displays the operational state of the sliding roof system acoustically by means of various tones and/or signal sequences.

7. Sliding roof system according to Claim 6, **characterized in that** it furthermore has a visual display device (13) which comprises illuminated elements (16), in particular signal lamps and/or light-emitting diodes.

8. Sliding roof system according to Claim 6, **characterized in that** it furthermore has an alphanumeric display device (14) which comprises an output unit for displaying the information in plain text.

9. Sliding roof system according to Claim 8, **characterized in that** a CAN bus is provided for transferring the information to the alphanumeric display device.

## Revendications

1. Procédé pour le fonctionnement d'un système de toit ouvrant (1) comportant un toit ouvrant (2), un entraînement de toit ouvrant (3) avec un moteur pour toit ouvrant et un dispositif (4) destiné à la commande de l'entraînement de toit ouvrant (3), dans lequel des informations sur l'état de fonctionnement du système de toit ouvrant (1) sont déterminées et signalées au moyen d'au moins un dispositif de signalisation (12, 13, 14),
**caractérisé en ce que**
les informations sont signalées de manière acoustique au moyen d'un émetteur de signaux (15) qui signale, par différents sons et/ou suites de signaux, l'état de fonctionnement du système de toit ouvrant.

2. Procédé selon la revendication 1,
**caractérisé en ce que**
le moteur est commandé (cadencé) par un signal, notamment par un signal de 2 kHz pour déterminer l'état de fonctionnement.

3. Procédé selon la revendication 1,
**caractérisé en ce que**
les informations sont par ailleurs signalées de manière optique au moyen d'éléments lumineux (16), notamment des témoins lumineux et/ou des diodes luminescentes.

4. Procédé selon la revendication 1,
**caractérisé en ce que** les informations sont par ailleurs affichées en clair au moyen d'un dispositif d'affichage (17) alphanumérique.

5. Procédé selon la revendication 4,
**caractérisé en ce que**
les informations sont transmises au dispositif d'affichage (17) alphanumérique au moyen d'un bus CAN.

6. Système de toit ouvrant (1) comportant un toit ouvrant (2), un entraînement de toit ouvrant (3) avec un moteur pour toit ouvrant et un dispositif (4) destiné à la commande de l'entraînement de toit ouvrant (3), un dispositif pour la détermination de l'état de fonctionnement du système de toit ouvrant (1), un ou plusieurs dispositifs de signalisation (12, 13, 14) pour la signalisation d'informations sur l'état de fonctionnement ainsi qu'une ou plusieurs sorties de signal (10, 11) pour la transmission des informations à au moins un dispositif de signalisation (12, 13, 14),
**caractérisé en ce que**
le dispositif de signalisation ou l'un des dispositifs de signalisation (12, 13, 14) est un dispositif de signalisation acoustique (12) qui comporte un émetteur de signaux (15) qui signale de manière acoustique l'état de fonctionnement du toit ouvrant par différents sons et/ou suites de signaux.

7. Système de toit ouvrant selon la revendication 6,
**caractérisé en ce qu'**
il présente par ailleurs un dispositif de signalisation optique (13) qui comporte des éléments lumineux (16), notamment des témoins lumineux et/ou des diodes luminescentes.

8. Système de toit ouvrant selon la revendication 6,
**caractérisé en ce qu'**
il présente par ailleurs un dispositif de signalisation (14) alphanumérique qui comporte une unité d'édition pour afficher les informations en clair.

9. Système de toit ouvrant selon la revendication 8,
**caractérisé en ce qu'**
il est prévu un bus CAN pour la transmission des informations au dispositif de signalisation alphanumérique.
